# EUROPEAN PATENT SPECIFICATION

(11) **EP 2 009 807 B1**
(45) Date of publication and mention of the grant of the patent: **07.04.2010**
(21) Application number: 08152948.9
(22) Date of filing: 18.03.2008
(51) Int. Cl.: H04B 3/54

(54) **Distributor power line communication system**
Verteilerstromlinien-Kommunikationssystem
Système de communication de ligne d'alimentation de distributeur

(30) Priority: 26.06.2007 EP 07111033
(43) Date of publication of application: 31.12.2008
(73) Proprietor: Eandis, 9090 Melle (BE)
(72) Inventor: Henderieckx, Luc, B-2550, Kontich (BE)
(74) Representative: Sarlet, Steven Renaat Irène

(56) References cited:
- US-A1- 2001 045 888
- US-A1- 2003 179 714
- US-A1- 2005 188 706

## Description

### Technical field

The present invention relates to the field of power line communication (PLC).

### Background art

In the coming years, utility companies, in casu those that operate distribution networks for electricity, will start replacing most or all of their electromechanical Ferraris meters by so called "smart meters" that can be read remotely. Several ways to communicate with those meters exist, but one in particular is ideally suited for the task, namely Power Line Communication or PLC. It offers two major advantages : it is in the hands of the LV network operators themselves and it is a means to get "plug and play" operation as the meter is automatically connected to the communication platform as the meter is branched to the low voltage network. From experiences all over the world results show that PLC communication is rather unreliable and in many cases is interrupted for several hours a day because a lot of noise and distortion is generated by all kinds of appliances in houses and buildings. Furthermore, the HF-power injected by the PLC modems on the outside cables or lines is severely limited by the very low and varying impedances seen on the LV-connections to the customers and in the LV-substation on the power transformer.

US 2003/179714 A1 discloses a distributor power line communication system comprising the features mentioned in the preamble of claim 1.

US 2001/045888 A1 relates to power line communication in general and provides a solution to isolate subscribers from each other or from a distribution transformer.

### Disclosure of the invention

It is an aim of the present invention to provide a more reliable distributor power line communication system.

This aim is achieved according to the invention with a distributor power line communication system showing the technical characteristics of the first claim.

The distributor power line communication system according to the invention comprises:
- a communication server, provided for sending and receiving messages over a telecommunication network,
- a power distribution substation comprising at least one transformer to which a power distribution network towards end users is connected,
- at least one gateway, provided for transferring messages from the telecommunication network onto power lines of the power distribution network and vice versa, the messages on the power lines being in a predetermined frequency band used for power line communication,
- a plurality of smart metering devices at end user mains networks, each being provided for measuring power consumption by the respective end user and comprising a power line communication modem connected to the power distribution network for sending and receiving messages within the predetermined frequency band over the power distribution network.
The system of the invention is characterised in that it comprises power line communication filters on the power lines which connect the power distribution network and the end user mains networks, as well as on the power lines which connect the power distribution network to the power distribution substation. Each of these filters comprises filtering components for blocking frequencies within the predetermined frequency band, which is used for the power line communication over the power distribution network.

The proposed technical solution according to the invention remedies sources of perturbations from both sides by inserting, on the one hand, a filter that isolates the power distribution network from end user installations on the PLC frequencies used by the smart metering devices, concentrators or external PLC modems, and on the other hand, a filter that separates the power distribution network from the very low and varying impedances seen on the power transformer in the substation, while having minimal impact on the power distribution network at the mains frequency.

The use of these filters can considerably reduce the recurring operating and maintenance cost for the network operator normally required to keep the PLC system running and can hence offer a large cost benefit. Furthermore, the signal to noise ratio can be improved a lot, so that far less retransmissions are required and the use of more efficient modulations like QPSK and QAM can be considered. These can offer a larger bandwidth efficiency (= data speed divided by bandwidth used) than FSK or other bandwidth inefficient modulation schemes which are commonly used for PLC so that functions that require more capacity and lower latency become feasable.

In preferred embodiments, each power line communication filter is a passive filter circuit comprising a first electric component having a first predetermined impedance for blocking the predetermined frequency band used for power line communication and a second electric component having a second impedance for passing a second frequency band encompassing the mains frequency of the power distribution network. An example of such a passive filter circuit comprises one or more parallel resonant circuits, for example LC-networks, which is inserted between the power distribution network and the end user installation, having impedances in such a way that a rejection frequency band covering the used frequency range of the PLC modems is obtained. Preferably the center of the rejection frequency band is at least two decades higher than the mains frequency to limit the impact of the filters on the transmission of electrical power on the mains frequency.

According to preferred embodiments of the invention, the filters can be installed either in the smart metering devices themselves or external. In both cases the signal of the PLC modem has to be injected upstream from the filter(s).

In the most preferred embodiment, substantially all drops from the power distribution network are provided with a PLC filter. This can include any unmetered drops like often used for public lighting and telephone boots, or other.

A gateway can for example be provided at the substation, or elsewhere in the power distribution network. In a preferred embodiment, one or more gateways are combined with one or more of the power line communication modems, so that no separate gateway needs to be provided. This means that the communication between the PLC server and the non-gateway smart metering devices occurs via one of the gateway smart metering devices. This solution is extremely convenient when for example the internet, a telephone line, or any other telecommunication network present at the end user installation is used for the communication between the gateway and the PLC server. The telecommunication network may also be any wireless telecommunication network known to the person skilled in the art. In case multiple gateways are present, the gateway function can be transferred from the one to the other when necessary.

In preferred embodiments, the smart metering devices may be further provided with a communication interface towards end user appliances, such as for example a local area network interface, a wireless interface (e.g. Bluetooth), a home power line communication interface or other. In this way, for example, the power distributor can achieve control over home appliances such as for example electric boilers, heating devices, washing machines, dryers and the like, or other appliances, and switch them on/off according to a given timing scheme. This can result in an overall more flat power consumption, which is beneficial from the viewpoint of electric power production, transport and distribution. The interface can also be used to connect other consumption metering devices, such as for example water and gas consumption metering devices, enabling remote read-out of these as well.

### Brief description of the drawings

The invention will be further elucidated by means of the following description and the appended figures.
Figure 1 schematically shows a general overview of first embodiment of a distributor power line communication system according to the invention.
Figure 2 schematically shows a general overview of a second embodiment of a distributor power line communication system according to the invention.
Figure 3 shows a more detailed scheme of a preferred embodiment of a smart metering device according to the invention with external PLC filtering.
Figure 4 shows a more detailed scheme of a preferred embodiment of a smart metering device according to the invention with internal PLC filtering.
Figure 5 shows examples of simple and double filter schematics.
Figure 6 shows impedance graphs of example simple and double filters according to figure 5.
Figure 7 shows an alternative embodiment of a smart metering device according to the invention.

### Modes for carrying out the invention

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not necessarily correspond to actual reductions to practice of the invention.

Furthermore, the terms first, second, third and the like in the description and in the claims, are used for distinguishing between similar elements and not necessarily for describing a sequential or chronological order. The terms are interchangeable under appropriate circumstances and the embodiments of the invention can operate in other sequences than described or illustrated herein.

Moreover, the terms top, bottom, over, under and the like in the description and the claims are used for descriptive purposes and not necessarily for describing relative positions. The terms so used are interchangeable under appropriate circumstances and the embodiments of the invention described herein can operate in other orientations than described or illustrated herein.

The term "comprising", used in the claims, should not be interpreted as being restricted to the means listed thereafter; it does not exclude other elements or steps. It needs to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

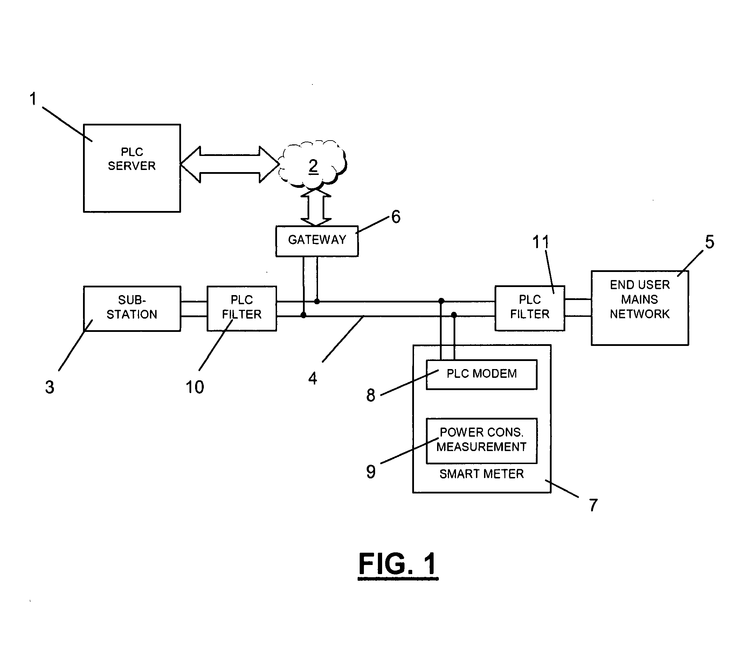

Figure 1 shows a first embodiment of a distributor power line communication system according to the invention. A power line communication server 1 is provided for sending and receiving messages over a telecommunication network 2. A power distribution substation 3 comprises at least one transformer to which a power distribution network 4 towards multiple end users 5 is connected, only one of which is shown. A gateway 6 transfers messages from the telecommunication network 2 onto the power lines of the power distribution network 4 and vice versa. The messages on the power lines are in a predetermined frequency band used for power line communication. A smart metering device 7 having a power consumption measurement device 9 is provided at each end user mains network 5 for measuring the power consumption by the respective end user. This device 7 comprises a power line communication modem 8 connected to the power distribution network 4 for sending and receiving messages within the predetermined frequency band over the power distribution network 4. The system of figure 1 further comprises power line communication filters 10, 11 on the power lines which connect the power distribution network 4 and the end user mains networks 5, as well as on the power lines which connect the power distribution network 4 to the power distribution substation 3. Each of these filters 10, 11 comprises filtering components for blocking frequencies within the predetermined frequency band, which is used for the power line communication over the power distribution network 4.

The filters 11 of the system of figure 1 are parallel resonant circuits, for example LC-networks, which are inserted between the LV-connection and the house or building installation 5 in such a way that a rejection frequency band covering the used frequency range of the PLC modems is obtained. The frequencies most often used for PLC are in the Cenelec PLC frequency bands A (9 - 95 Khz) reserved for utility use and C+D (125 - 148,5 kHz) for use inside buildings, but band B (95 - 125 kHz) may also be used by end users. The proposed solution can be efficient for all the PLC frequencies used. Preferably the center of the rejection frequency band is at least two decades higher than the mains frequency to limit the impact of the filters on the transmission of electrical power on the mains frequency. So for the mains frequency of 50 Hz, the center of the rejection frequency band is preferably higher than 5000 Hz.

The result is also that the virtual short circuit of the PLC frequencies caused by the building installation 5 and connected appliances is removed and noise generated inside houses and buildings is attenuated towards the outside LV cables or lines in the power distribution network 4.

The same kind of circuit 10 is inserted between the secondary taps of the MV/LV transformer and the LV cables or lines leaving the substation 3 to remove the short circuit seen by the PLC signals because of the transformer's low impedance on its secondary windings. Separate filters on the different cables leaving the substation make it possible to segment the distribution area so that a smaller number of connections is present on each PLC segment, which can further reduce the noise injected and the impedance drop seen on the network at the PLC-frequency band.

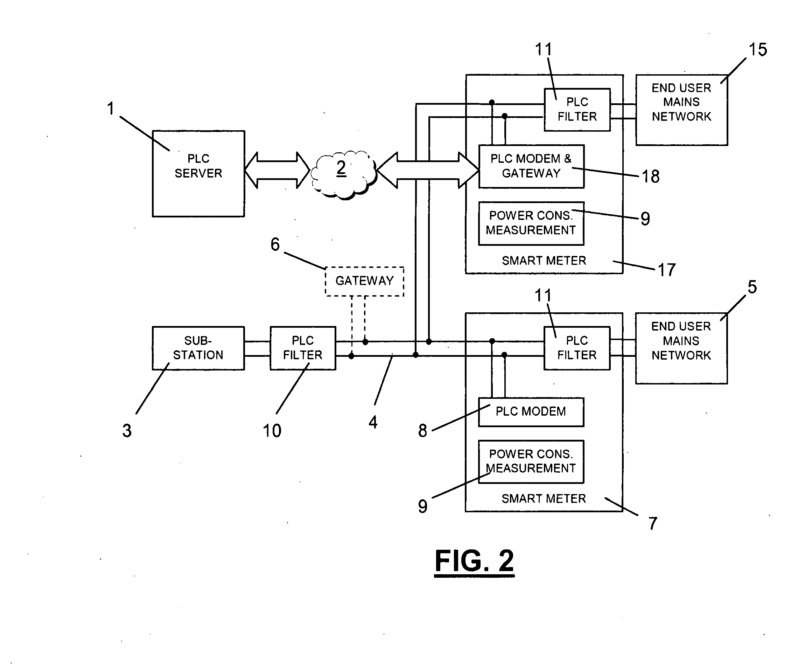

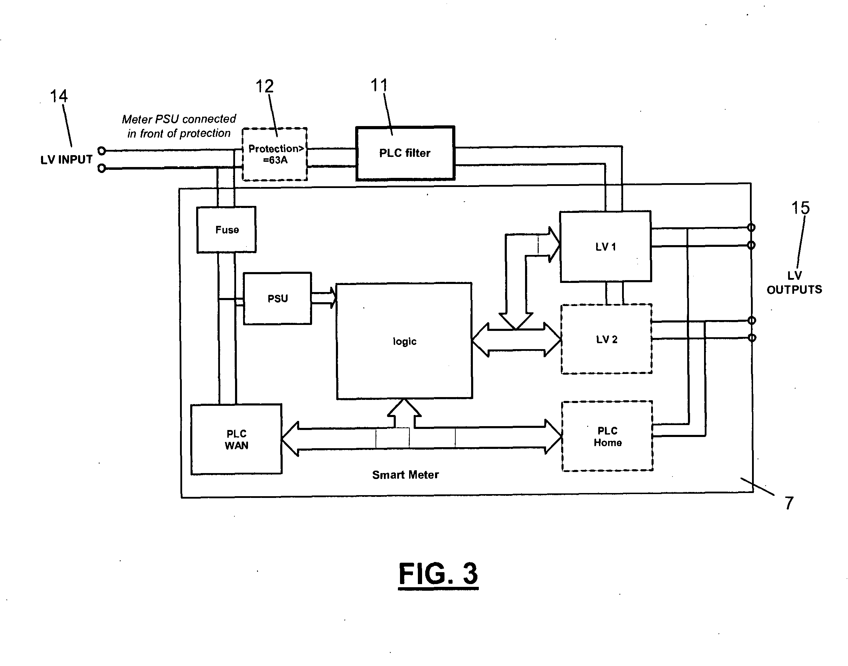

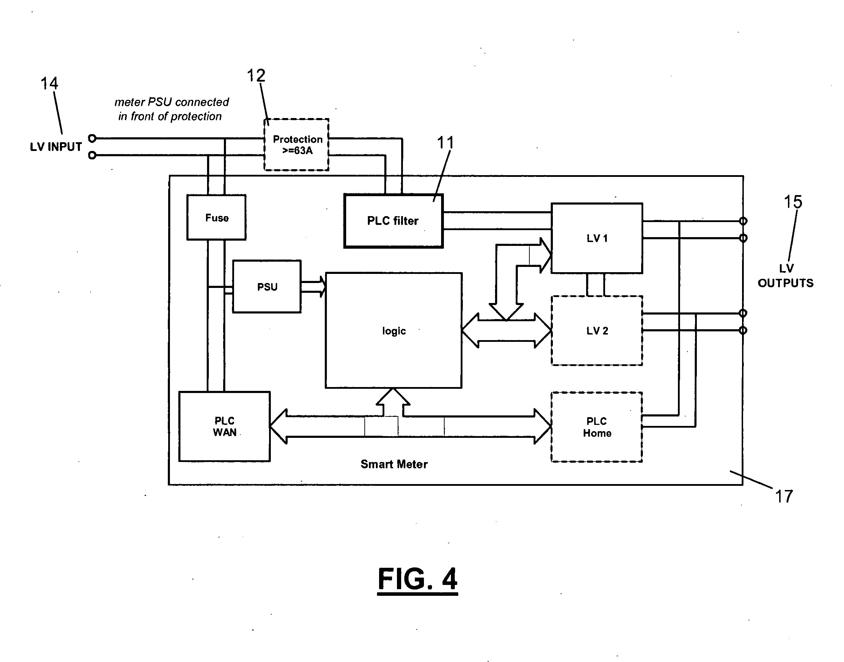

The filters 11 can be external as shown in figure 1, but may also be integrated into the smart meters 7, 17 as shown in the system of figure 2. In both cases the signal of the PLC modem 8 has to be injected upstream from the filter(s) 11 for the wide area PLC over the distribution network 4. PLC signals which are to be further communicated inside the building 5 are re-injected downstream from the filter(s) 11 (see figures 3 and 4).

The system shown in figure 2 further differs from that of figure 1 in that one (or more) of the smart meters 17 at a given end user 15 has a PLC modem 18 which also functions as gateway towards the telecommunications network 2. This does not preclude that the first gateway 6 of the system of figure 1 is present as well, but it can be omitted. The presence of multiple gateways 6, 16 means that the gateway function can be transferred from the one to the other if necessary.

In the most preferred embodiment, all drops from a distribution network 4 are filtered. This can include any unmetered drops like often used for public lighting and telephone boots.

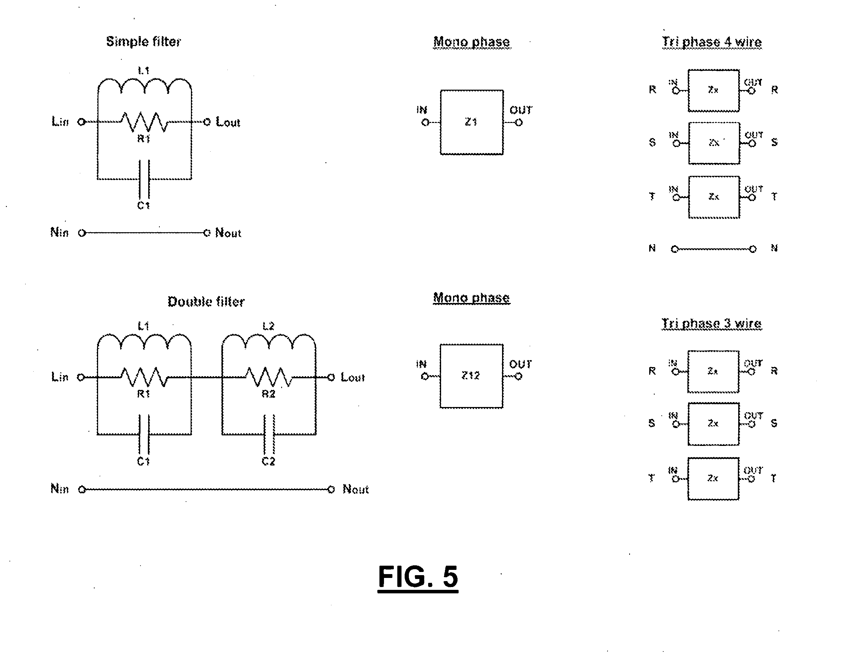

The filters 10, 11 are one or more parallel resonant circuits, for example LC-networks (see figure 5: L1-R1-C1), designed so as to limit the voltage drop caused by the inductance at mains frequency (50 or 60 Hz). For example if the value of the coils is lower than about 2 mH this condition can be considered fulfilled up to 63 A load current as the voltage drop is then limited to about 1% or 2.3 V. Extra benefit of this series coil is that short circuit currents are reduced to safer values. Thanks to the very low coil winding resistance, these coils do not cause considerable power losses. The use of the higher part of the Cenelec Band A frequency range permits the use of smaller inductance and capacitor values and can hence further limit the influence of the filters on the mains frequency.

The filters 11 are designed to sustain the nominal load current of the connected user network 5 (order of magnitude maximum 100 A) without overheating and survive typical short circuit currents on LV-networks (similar requirement as put on the current coils used in Ferraris meters). The filter 10 is designed to sustain the full load connected to the substation or the respective substation outlet at which the filter is provided (substations may have multiple outlets), as well as to survive typical short circuit currents.

Figure 5 shows simple Z1 and double Z12 filter schematics. For the tri phase 4 wire system preferably the same filter circuit Z1 is used on the three power lines R, S and T. Optionally an additional filter circuit can be used on the neutral conductor N. For tri phase meters, preferably injection of the PLC signals is also tri phase with ideally 120° phase rotation.

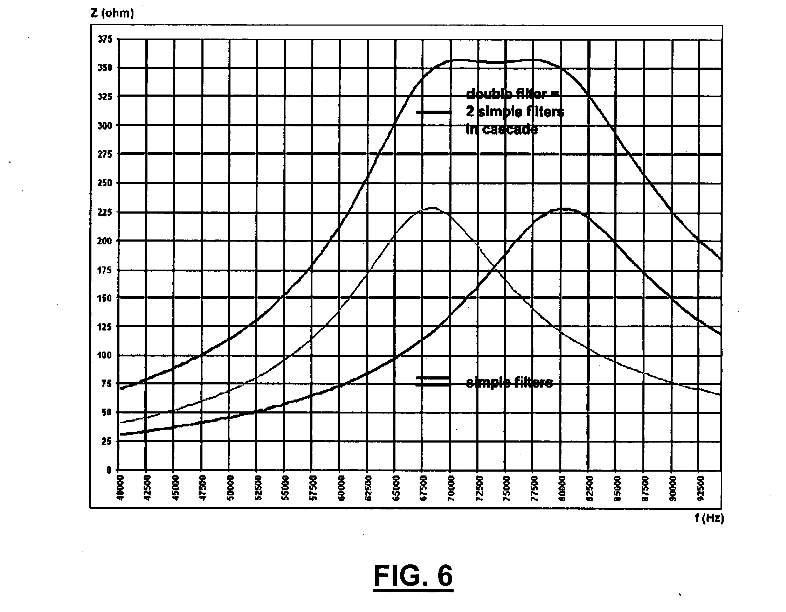

Figure 6 shows impedance graphs of example simple and double filters according to figure 5. It is clear that the double filter Z12, being two simple filters L1-R1-C1 and L2-R2-C2 in cascade, shows a rejection band which is a combination of the two rejection bands of the simple filters.

The invention as described above proposes a novel approach to use passive filters to improve the properties of a network that was never designed to carry communication signals. Experience worldwide has proven that even when using advanced protocols that support retransmission of corrupt data, PLC modems that act as repeaters, and robust but low effiency modulation schemes like FSK, powerline communication is still not reliable enough to be considered a "near real time" communication system.

The use of the aforementioned filters can improve the signal to noise ratio of powerline communication signals by typically 20 dB if properly designed and as such can improve the reliability of the powerline communication by several orders of magnitude and can remove most PLC outages. This makes it possible to use a smart metering system to offer near real time services to the customers and use it to improve network utilisation by dynamically switching loads to remove temporary overloads. Power consumption of customers can be read interval per interval, so that they can use the system to improve their consumption profile via the retrieval of near real time online consumption information via the webservers of utilities.

The use of these filters 10, 11 can considerably reduce the recurring operating and maintenance cost for the network operator normally required to keep the PLC system running and can hence offer a large cost benefit.

As the signal to noise ratio can be improved a lot, far less retransmissions are required and the use of more efficient modulations like QPSK and QAM can be considered. These can offer a larger bandwidth efficiency (= data speed divided by bandwidth used) than FSK which is commonly used for PLC so that functions that require more capacity and lower latency become feasable.

Figure 3 shows the smart metering device 7 in greater detail. The following functional blocks can be distinguished:
- LV input, 14
   These are connected to the distribution network 4.
- LV outputs, 15
   These are connected to the end user mains network 5.
- "logic"
   Central processing unit with memory for meter data, firmware and parameters. This is in fact the most functional part of the device, which controls the power consumption metering process, power line communication process as well as possibly many other processes.
   The firmware and certain parameters can for example be upgraded via the PLC WAN interface or the Ethernet interface. So this can be effected from the PLC server and does not require a skilled worker to travel to the device for upgrades.
   The unit has sufficient non-volatile memory to store metered data of at least a couple of days. This can include not only the electric power consumption, but for example also information on the quality of the supplied power (harmonics) or data coming from external metering devices for example for gas/water consumption.
- PSU
   Low loss switching supply circuit without transformer, provided with a backup battery for cases of power interruption.
- PLC WAN
   This is the PLC modem enabling the sending and receiving of messages over the power line distribution network.
- LV1 and LV2
   Low-voltage outputs. With interrupter and measurement circuits for current and voltage. All low-voltage outs are disconnectable upon interruption of the power supply. The tariff switching can be performed by means of remote programmable tariff periods, under control of the realtime clock (RTC) of the meter.
- PLC home
   Optional interface towards the end user network, intended for communication with intelligent applications (e.g. washing machines, dryers, heating, hot water, cooling, CHP, ...). PLC is in this respect advantageous because it offers plug-and-play functionality.
   This can for example be used to connect alarm systems with an alarm central. PLC communication is advantageous in this respect because of it is not easily circumvented or disrupted.
- LV Protection >= 63A, 12
   This is an additional short circuit protection which is required in some states.
   Figure 4 shows the smart metering device 17 in greater detail. The following functional blocks can be distinguished. The difference with the device 7 of figure 3 is that the PLC filter 11 is integrated.

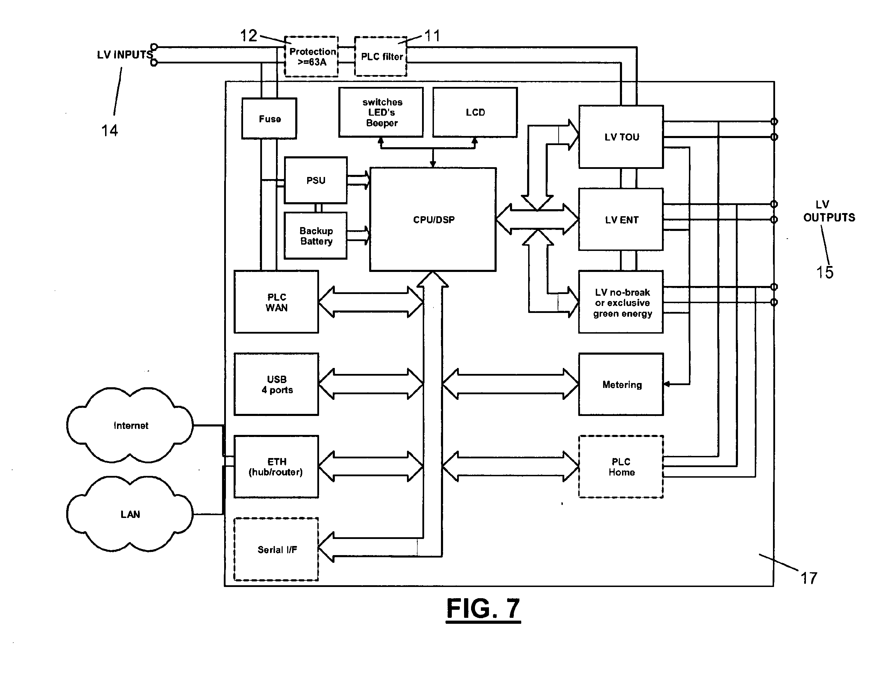

   Figure 7 shows an alternative embodiment of a smart metering device 27 which can be used in distribution systems according to the invention. The following functional blocks can be distinguished:
- LV input, 14
   These are connected to the distribution network 4.
- LV outputs, 15
   These are connected to the end user mains network 5.
- CPU/DSP
   Central processing unit with memory for meter data, firmware and parameters. This is in fact the most functional part of the device, which controls the power consumption metering process, power line communication process as well as possibly many other processes.
   The firmware and certain parameters can for example be upgraded via the PLC WAN interface or the Ethernet interface. So this can be effected from the PLC server and does not require a skilled worker to travel to the device for upgrades.
   The unit has sufficient non-volatile memory to store metered data of at least a couple of days. This can include not only the electric power consumption, but for example also information on the quality of the supplied power (harmonics) or data coming from external metering devices for example for gas/water consumption.
- PSU
   Low loss switching supply circuit without transformer, provided with a backup battery for cases of power interruption.
- LCD, switches, LEDs, beeper
   Locally indicating metered data, events, parameters, alarms, etc. Possibly a number of user controls are provided on the device for interface with a user. Different LEDs can for example be used for different tariffs.
- PLC WAN
   This is the PLC modem enabling the sending and receiving of messages over the power line distribution network. Via the Ethernet port (ETH) this modem also functions as the gateway via which other smart meters connected to the same distribution network can be reached by the PLC server. This modem is multi-channel, so that it can switch to another channel if the previous channel is too much disturbed. This also enables simultaneous upstream and downstream messages.
   The modem also monitors the signal to noise ratio and issues a warning if the PLC signal becomes too weak.
- USB
   A number of USB ports are provided for connecting external meters (gas, water, ...) or other equipment. USB is convenient in view of the ability to supply power to the external meters. Other alternative ports may however also be considered.
- ETH
   Ethernet port for connection to the telecommunications network (e.g. internet) or external equipment.
- Serial I/F (optional)
   Possible for connection to a portable device or PC.
- LV TOU output
   Low-voltage time-of-use output, e.g. double tariff (day/night) output. With interrupter and measurement circuits for current and voltage. All low-voltage outs are disconnectable upon interruption of the power supply. The tariff switching can be performed by means of remote programmable tariff periods, under control of the realtime clock (RTC) of the meter.
- LV ENT output
   Low-voltage exclusive night tariff output.
- LV no-break or exclusive green energy output
   Output for either "uninterruptable" supply which is applied to critical applications for which an interruption in the power supply could lead to serious harm or loss of critical data or the like, or appliances which the user wants to power exclusively by green energy.
- PLC home
   Optional interface towards the end user network, intended for communication with intelligent applications (e.g. washing machines, dryers, heating, hot water, cooling, CHP, ...). PLC is in this respect advantageous because it offers plug-and-play functionality.
   This can for example be used to connect alarm systems with an alarm central. PLC communication is advantageous in this respect because of it is not easily circumvented or disrupted.
- LV Protection >= 63 A
   This is an additional short circuit protection which is required in some states.

## Claims

1. Distributor power line communication system comprising:
- a communication server (1), provided for sending and receiving messages over a telecommunication network (2),
- a power distribution substation (3) comprising at least one transformer to which a power distribution network (4) towards end users (5) is connected,
- at least one gateway (6; 18), provided for transferring messages from the telecommunication network (2) onto power lines of the power distribution network (4) and vice versa, the messages on the power lines being in a predetermined frequency band used for power line communication,
- a plurality of smart metering devices (7; 17; 27) at end user mains networks, each being provided for measuring power consumption by the respective end user and comprising a power line communication modem (8; 18) connected to the power distribution network for sending and receiving messages within the predetermined frequency band over the power distribution network (4),
**characterised in that** the system further comprises power line communication filters (10, 11) on power lines connecting the power distribution network and the end user mains networks and on power lines connecting the power distribution network to the power distribution substation, each filter comprising filtering components (L1, R1, C1; L2, R2, C2) for blocking frequencies within the predetermined frequency band.

2. Distributor power line communication system according to claim 1, **characterised in that** each power line communication filter (10, 11) is a passive filter circuit comprising a first electric component having a first predetermined impedance for blocking the predetermined frequency band used for power line communication and a second electric component having a second impedance for passing a second frequency band encompassing the mains frequency of the power distribution network.

3. Distributor power line communication system according to claim 1 or 2, **characterised in that** the center of the predetermined frequency band is at least two decades higher than the mains frequency of the power distribution network.

4. Distributor power line communication system according to any one of the claims 1-3, **characterised in that** each of the smart metering devices comprises one of the power line communication filters (11) as an integrated component.

5. Distributor power line communication system according to any one of the claims 1-3, **characterised in that** the power line communication filters (11) are external components to the smart metering devices.

6. Distributor power line communication system according to any one of the claims 1-5, **characterised in that** unmetered drops from the power distribution network are also provided with power line communication filters.

7. Distributor power line communication system according to any one of the claims 1-6, **characterised in that** a first (18) of the at least one gateways is incorporated into one of the smart metering devices (17).

8. Distributor power line communication system according to any one of the claims 1-7, **characterised in that** a second of the at least one gateways (6) is located at a distribution station of the power distribution network.

9. Distributor power line communication system according to any one of the claims 1-8, **characterised in that** at least one of the smart metering devices (7; 17; 27) is provided with a communication interface towards end user appliances.

## Patentansprüche

1. Verteiler-Stromleitungskommunikationssystem, das Folgendes umfasst:
- einen Kommunikationsserver (1), der zum Senden und Empfangen von Nachrichten über ein Telekommunikationsnetz (2) vorgesehen ist,
- eine Stromverteilungs-Unterstation (3), die mindestens einen Transformator umfasst, an den ein zu Endverbrauchern (5) hinführendes Stromverteilungsnetz (4) angeschlossen ist,
- mindestens einen Gateway (6; 18), der zum Übertragen von Nachrichten aus dem Telekommunikationsnetz (2) in Stromleitungen des Stromverteilungsnetzes (4) und umgekehrt ausgelegt ist, wobei die Nachrichten in den Stromleitungen in einem vorgegebenen Frequenzband liegen, das zur Stromleitungskommunikation genutzt wird,
- mehrere intelligente Messgeräte (7; 17; 27) in Endverbraucher-Stromnetzen, die jeweils zum Messen des Stromverbrauchs durch den jeweiligen Endverbraucher vorgesehen sind und ein Stromleitungskommunikationsmodem (8; 18) umfassen, das mit dem Stromverteilungsnetz verbunden ist, um Nachrichten innerhalb des vorgegebenen Frequenzbandes über das Stromverteilungsnetz (4) zu senden und zu empfangen,
**dadurch gekennzeichnet, dass** das System des Weiteren Stromleitungskommunikationsfilter (10, 11) in Stromleitungen, die das Stromverteilungsnetz und die Endverbraucher-Stromnetze verbinden, sowie in Stromleitungen, die das Stromverteilungsnetz mit der Stromverteilungs-Unterstation verbinden, umfasst, wobei jeder Filter Filterkomponenten (L1, R1, C1; L2, R2, C2) zum Sperren von Frequenzen innerhalb des vorgegebenen Frequenzbandes umfasst.

2. Verteiler-Stromleitungskommunikationssystem nach Anspruch 1,
**dadurch gekennzeichnet, dass** jeder Stromleitungskommunikationsfilter (10, 11) ein passiver Filterschaltkreis ist, der eine erste elektrische Komponente umfasst, die eine erste vorgegebene Impedanz aufweist, um das vorgegebene Frequenzband zu sperren, das zur Stromleitungskommunikation benutzt wird, und eine zweite elektrische Komponente umfasst, die eine zweite Impedanz aufweist, um ein zweites Frequenzband durchzulassen, das die Netzfrequenz des Stromverteilungsnetzes umfasst.

3. Verteiler-Stromleitungskommunikationssystem nach Anspruch 1 oder 2, **dadurch gekennzeichnet, dass** die Mitte des vorgegebenen Frequenzbandes mindestens zwei Dekaden höher ist als die Netzfrequenz des Stromverteilungsnetzes.

4. Verteiler-Stromleitungskommunikationssystem nach einem der Ansprüche 1-3, **dadurch gekennzeichnet, dass** jedes der intelligenten Messgeräte eines der Stromleitungskommunikationsfilter (11) als eine integrierte Komponente umfasst.

5. Verteiler-Stromleitungskommunikationssystem nach einem der Ansprüche 1-3, **dadurch gekennzeichnet, dass** die Stromleitungskommunikationsfilter (11) Komponenten sind, die sich außerhalb der intelligenten Messgeräte befinden.

6. Verteiler-Stromleitungskommunikationssystem nach einem der Ansprüche 1-5, **dadurch gekennzeichnet, dass** nicht-gemessene Fallleitungen vom Stromverteilungsnetz ebenfalls mit Stromleitungskommunikationsfiltern ausgestattet sind.

7. Verteiler-Stromleitungskommunikationssystem nach einem der Ansprüche 1-6, **dadurch gekennzeichnet, dass** ein erster (18) der mindestens einen Gateways in eines der intelligenten Messgeräte (17) integriert ist.

8. Verteiler-Stromleitungskommunikationssystem nach einem der Ansprüche 1-7, **dadurch gekennzeichnet, dass** ein zweiter der mindestens einen Gateways (6) in einer Verteilungsstation des Stromverteilungsnetzes angeordnet ist.

9. Verteiler-Stromleitungskommunikationssystem nach einem der Ansprüche 1-8, **dadurch gekennzeichnet, dass** mindestens eines der intelligenten Messgeräte (7; 17; 27) mit einer Kommunikationsschnittstelle in Richtung von Endverbrauchergeräten versehen ist.

## Revendications

1. Système de communication par courant porteur de distributeur comprenant :
- un serveur de communication (1) prévu pour envoyer et recevoir des messages par un réseau de télécommunication (2),
- un sous-poste (3) de distribution de courant électrique comprenant au moins un transformateur auquel un réseau de distribution de courant électrique (4) en direction d'usagers finaux (5) est connecté,
- au moins une passerelle (6; 18), prévue pour transférer des messages provenant du réseau de télécommunication (2) sur des lignes de courant électrique du réseau de distribution de courant électrique (4) et vice versa, les messages sur les lignes de courant électrique se trouvant dans une bande de fréquence prédéterminée utilisée pour la communication par courant porteur,
- une pluralité de dispositifs compteurs intelligents (7; 17; 27) au niveau des réseaux électriques des usagers finaux, chacun étant prévu pour mesurer une consommation de courant électrique par l'usager final concerné et comprenant un modem (8; 18) de communication par courant porteur connecté au réseau de distribution de courant électrique pour envoyer et recevoir des messages dans la bande de fréquence prédéterminée par le réseau de distribution de courant électrique (4),
**caractérisé en ce que** le système comprend en outre des filtres (10, 11) de communication par courant porteur sur des lignes de courant électrique reliant le réseau de distribution de courant électrique et les réseaux électriques des usagers finaux et sur les lignes de courant électrique reliant le réseau de distribution de courant électrique au poste de distribution de courant électrique, chaque filtre comprenant des composants filtrants (L1, R1, C1; L2, R2, C2) pour bloquer des fréquences dans la bande de fréquence prédéterminée.

2. Système de communication par courant porteur de distributeur selon la revendication 1, **caractérisé en ce que** chaque filtre (10, 11) de communication par courant porteur est un circuit de filtre passif comprenant un premier composant électrique ayant une première impédance prédéterminée pour bloquer la bande de fréquence prédéterminée utilisée pour la communication par courant porteur et un deuxième composant électrique ayant une deuxième impédance pour laisser passer une deuxième bande de fréquence englobant la fréquence du réseau de distribution de courant électrique.

3. Système de communication par courant porteur de distributeur selon la revendication 1 ou 2, **caractérisé en ce que** le centre de la bande de fréquence prédéterminée est supérieur d'au moins deux décades à la fréquence du réseau de distribution de courant électrique.

4. Système de communication par courant porteur de distributeur selon l'une quelconque des revendications 1 à 3, **caractérisé en ce que** chacun des dispositifs compteurs intelligents comprend un des filtres (11) de communication par courant porteur comme composant intégré.

5. Système de communication par courant porteur de distributeur selon l'une quelconque des revendications 1 à 3, **caractérisé en ce que** les filtres (11) de communication par courant porteur sont des composants extérieurs aux dispositifs compteurs intelligents.

6. Système de communication par courant porteur de distributeur selon l'une quelconque des revendications 1 à 5, **caractérisé en ce que** les chutes de tension non mesurées du réseau de distribution de courant électrique sont également pourvues de filtres de communication par courant porteur.

7. Système de communication par courant porteur de distributeur selon l'une quelconque des revendications 1 à 6, **caractérisé en ce qu'**une première (18) desdites au moins une passerelle est incorporée dans un des dispositifs compteurs intelligents (17).

8. Système de communication par courant porteur de distributeur selon l'une quelconque des revendications 1 à 7, **caractérisé en ce qu'**une deuxième desdites au moins une passerelle (6) est située dans un poste de distribution du réseau de distribution de courant électrique.

9. Système de communication par courant porteur de distributeur selon l'une quelconque des revendications 1 à 8, **caractérisé en ce qu'**au moins un des dispositifs compteurs intelligents (7; 17; 27) est pourvu d'une interface de communication avec les appareils d'usagers finaux.
